(19) Europäisches Patentamt / European Patent Office / Office européen des brevets

(11) **EP 4 008 948 A1**

(12) **EUROPÄISCHE PATENTANMELDUNG**

(43) Veröffentlichungstag:
**08.06.2022 Patentblatt 2022/23**

(21) Anmeldenummer: 20020585.4

(22) Anmeldetag: **02.12.2020**

(51) Internationale Patentklassifikation (IPC):
*F17C 13/02* *(2006.01)*

(52) Gemeinsame Patentklassifikation (CPC):
**F17C 13/023;** F17C 2201/0109; F17C 2201/035;
F17C 2201/052; F17C 2205/018; F17C 2221/011;
F17C 2221/012; F17C 2221/014; F17C 2221/017;
F17C 2223/0161; F17C 2223/033; F17C 2250/032;
F17C 2250/0421; F17C 2250/0615;
F17C 2250/0694; (Forts.)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Linde GmbH
82049 Pullach (DE)**

(72) Erfinder:
• **Aigner, Herbert
84367 Reut-Taubenbach (DE)**
• **Schönberger, Manfred
83342 Tacherting (DE)**
• **Wilhelm, Kilian
63150 Heusenstamm (DE)**

(74) Vertreter: **Meilinger, Claudia Sabine
Linde GmbH
Intellectual Property EMEA
Dr.-Carl-von-Linde-Straße 6-14
82049 Pullach (DE)**

(54) **VERFAHREN UND SPEICHERBEHÄLTERANORDNUNG**

(57) Ein Verfahren zum Wiegen eines in einem Speicherbehälter (5) aufgenommenen Kryogens (H2) auf einem Fahrzeug (1), mit folgenden Schritten: a) Erfassen (S1) einer Masse (m(t)) des Speicherbehälters (5) mitsamt des Kryogens (H2), b) Bestimmen (S2) eines Korrekturfaktors (k) mit Hilfe einer Kompensationseinrichtung (20), und c) Verrechnen (S3) der in dem Schritt a) erfassten Masse (m(t)) des Speicherbehälters (5) mitsamt des Kryogens (H2) mit dem Korrekturfaktor (k), um bewegungsbedingte Abweichungen der erfassten Masse (m(t)) des Speicherbehälters (5) mitsamt des Kryogens (H2) von einer tatsächlichen Masse (m) des Speicherbehälters (5) mitsamt des Kryogens (H2) zu kompensieren.

Fig. 3

EP 4 008 948 A1

**(Forts. nächste Seite)**

(52) Gemeinsame Patentklassifikation (CPC): (Forts.)
F17C 2260/024; F17C 2270/0105;
F17C 2270/0171; F17C 2270/0173;
F17C 2270/0186

**Beschreibung**

Die Erfindung betrifft ein Verfahren zum Wiegen eines in einem Speicherbehälter aufgenommenen Kryogens auf einem Fahrzeug und eine Speicherbehälteranordnung für ein derartiges Fahrzeug.

Bei der Anwendung von flüssigem Wasserstoff in einem Fahrzeug ist es erforderlich, den flüssigen Wasserstoff in einem Speicherbehälter zu speichern. Insbesondere bei maritimen Anwendungen muss mit durch den Seegang verursachter Bewegung des in dem Speicherbehälter aufgenommenen flüssigen Wasserstoffs gerechnet werden. Bei einem liegend angeordneten zylinderförmigen Speicherbehälter wird durch die Massenträgheit des flüssigen Wasserstoffs und die durch den liegenden Einbau vorhandene Krümmung des Speicherbehälters sowohl an dessen zylinderförmiger Außenwandung als auch an dessen Enden ein großflächiges Schwappen des flüssigen Wasserstoffs begünstigt. Durch das Schwappen des flüssigen Wasserstoffs und durch seine physikalischen Eigenschaften ist eine zuverlässige Bestimmung einer in dem Speicherbehälter aufgenommenen Menge an Wasserstoff gemäß betriebsinternen Erkenntnissen technisch nur sehr aufwendig über die Messung verschiedener physikalischer Größen und deren komplexe Verrechnung realisierbar. Dies gilt es zu verbessern.

Vor diesem Hintergrund besteht die Aufgabe der vorliegenden Erfindung darin, ein verbessertes Verfahren zum Wiegen eines in einem Speicherbehälter aufgenommenen Kryogens zur Verfügung zu stellen.

Demgemäß wird ein Verfahren zum Wiegen eines in einem Speicherbehälter aufgenommenen Kryogens auf einem Fahrzeug vorgeschlagen. Das Verfahren umfasst die folgenden Schritte: a) Erfassen einer Masse des Speicherbehälters mitsamt dem Kryogen, b) Bestimmen eines Korrekturfaktors mit Hilfe einer Kompensationseinrichtung, und c) Verrechnen der in dem Schritt a) erfassten Masse des Speicherbehälters mitsamt dem Kryogen mit dem Korrekturfaktor, um bewegungsbedingte Abweichungen der erfassten Masse des Speicherbehälters mitsamt dem Kryogen von einer tatsächlichen Masse des Speicherbehälters mitsamt dem Kryogen zu kompensieren.

Durch die Anwendung des Korrekturfaktors ist es möglich, Schwankungen der erfassten Masse des Speicherbehälters mitsamt dem Kryogen aufgrund von starken Bewegungen des Speicherbehälters, beispielsweise bei starkem Seegang, zu kompensieren und so die Masse des Kryogens erfassen zu können, unabhängig davon, ob das Kryogen gasförmig oder flüssig und unabhängig davon, welche Dichte das Kryogen aufweist.

Das Fahrzeug ist vorzugsweise ein Wasserfahrzeug, insbesondere ein Schiff. Das Fahrzeug ist insbesondere für einen maritimen Einsatz geeignet. Beispielsweise ist das Fahrzeug ein Frachtschiff oder eine Personenfähre. Das Kryogen ist vorzugsweise Wasserstoff. Die Begriffe "Kryogen" und "Wasserstoff" können daher beliebig miteinander getauscht werden. Grundsätzlich kann das Kryogen jedoch auch ein beliebiges anderes Kryogen sein. Beispiele für kryogene Fluide oder Flüssigkeiten, oder kurz Kryogene, sind neben dem zuvor erwähnten Wasserstoff flüssiges Helium, flüssiger Stickstoff oder flüssiger Sauerstoff. Unter einem "Kryogen" ist somit insbesondere eine Flüssigkeit zu verstehen. Das Kryogen kann auch verdampft und so in die gasförmige Phase überführt werden. Nach dem Verdampfen ist das Kryogen ein Gas oder kann als gasförmiges oder verdampftes Kryogen bezeichnet werden.

In dem Speicherbehälter bildet sich nach oder bei dem Einfüllen des Kryogens eine Gaszone sowie eine darunterliegende Flüssigkeitszone. Zwischen der Gaszone und der Flüssigkeitszone ist eine Phasengrenze vorgesehen. Das Kryogen weist also nach dem Einfüllen in den Speicherbehälter vorzugsweise zwei Phasen mit unterschiedlichen Aggregatszuständen, nämlich flüssig und gasförmig, auf. Die flüssige Phase kann in die gasförmige Phase und umgekehrt übergehen.

Das Erfassen der Masse des Speicherbehälters mitsamt dem Kryogen kann beispielsweise mit Hilfe von unter dem Speicherbehälter platzierten Wägezellen erfolgen. Die in dem Schritt a) erfasste Masse des Speicherbehälters mitsamt dem Kryogen schwankt aufgrund einer vertikalen Bewegung des Speicherbehälters, beispielsweise aufgrund von starkem Seegang. Bei der vertikalen Bewegung des Speicherbehälters, das heißt bei einer Bewegung desselben entlang und entgegen einer Schwerkraftrichtung, wirken auf den Speicherbehälter und seinen Inhalt in Form des Kryogens positive und negative Beschleunigungen. Beispielsweise kann bei starkem Seegang auf den Speicherbehälter mitsamt dem Kryogen das $\pm$ 0,8-fache der Erdbeschleunigung wirken.

Unter der "erfassten" Masse ist die zu einem beliebigen Zeitpunkt bestimmte und sich aufgrund der vertiklalen Bewegung des Speicherbehälters beschleunigungsbedingt oder verzögerungsbedingt schwankende Masse zu verstehen, die nicht zwingend mit der tatsächlichen Masse übereinstimmt. Unter der "tatsächlichen" Masse ist dementsprechend die Masse zu verstehen, die theoretisch dann erfasst werden kann, wenn der Speicherbehälter stillsteht und somit auf diesen keine durch den Seegang bedingten Verzögerungen und Beschleunigungen wirken.

Zum Bestimmen des Korrekturfaktors in dem Schritt b) kann die Kompensationseinrichtung eine Auswerteeinheit umfassen. Die Auswerteeinheit kann ein Rechner oder ein Computer sein. Der Korrekturfaktor wird vorzugsweise dadurch bestimmt, dass mit Hilfe einer Wägezelle der Kompensationseinrichtung eine Masse eines auf der Wägezelle platzierten Gewichtselements zeitabhängig erfasst wird. Auf dieses Gewichtselement wirken dieselben Beschleunigungen und Verzögerungen, welche auch auf den Speicherbehälter mit seinem Inhalt in Form des Kryogens wirken.

Da jedoch die Masse des Gewichtselements bekannt ist, kann anhand des bekannten Gewichts und anhand des mit Hilfe der Wägezelle der Kompensationseinrichtung erfassten Masse des Gewichtselements der Korrekturfaktor errechnet werden. Dieser Korrekturfaktor kann in dem Schritt c) mit der in dem Schritt a) erfassten Masse des Speicherbehälters mitsamt dem Kryogen derart verrechnet werden, dass die tatsächliche Masse des Speicherbehälters mitsamt dem Kryogen ermittelbar ist.

Die Masse des Kryogens selbst kann dann anhand eines bekannten Leergewichts des Speicherbehälters errechnet werden. Dass mit Hilfe des Korrekturfaktors die bewegungsbedingten Abweichungen der erfassten Masse "kompensiert" werden können, bedeutet vorliegend, dass mit Hilfe des Korrekturfaktors beschleunigungsbedingte und verzögerungsbedingte Auswirkungen auf das Erfassen der Masse des Speicherbehälters mitsamt des Kryogens herausgerechnet werden können.

Gemäß einer Ausführungsform wird in dem Schritt c) eine Masse des leeren Speicherbehälters von der tatsächlichen Masse des Speicherbehälters mitsamt dem Kryogen subtrahiert, um eine Masse des Kryogens zu erhalten.

Die Masse des leeren Speicherbehälters ist bekannt und kann in der Auswerteeinheit hinterlegt sein. Beispielsweise beträgt die Masse des Speicherbehälters mitsamt dem Kryogen etwa 20 t, wobei etwa 16 t auf den leeren Speicherbehälter entfallen können.

Gemäß einer weiteren Ausführungsform wird in dem Schritt a) die Masse des Speicherbehälters mitsamt dem Kryogen mit Hilfe von Wägezellen erfasst, auf welchen der Speicherbehälter platziert ist.

Vorzugsweise sind die Wägezellen zwischen einem Fundament und Standbeinen des Speicherbehälters vorgesehen. Beispielsweise sind vier derartige Standbeine und demgemäß auch vier derartige Wägezellen vorgesehen. Unter einer "Wägezelle" ist vorliegend eine Sonderform eines Kraftaufnehmers zu verstehen. Im Gegensatz zu einem Kraftaufnehmer ist eine Wägezelle in Gramm, Kilogramm oder Tonnen kalibriert, und nicht in Newton wie ein Kraftaufnehmer.

Gemäß einer weiteren Ausführungsform wird in dem Schritt b) der Korrekturfaktor dadurch bestimmt, dass eine erfasste Masse eines Gewichtselements mit einer tatsächlichen Masse des Gewichtselements verglichen wird.

Der Korrekturfaktor ergibt sich beispielsweise durch ein Verhältnis der erfassten Masse zu der tatsächlichen Masse des jeweiligen Gewichtselements. Es kann für jedes Gewichtselement ein eigener Korrekturfaktor errechnet werden. Aus allen Korrekturfaktoren kann ein durchschnittlicher Korrekturfaktor bestimmt werden. Vorzugsweise ist jedem Standbein des Speicherbehälters ein Gewichtselement zugeordnet. Es können vier Gewichtselemente vorgesehen sein.

Gemäß einer weiteren Ausführungsform wird die Masse des Gewichtselements mit Hilfe einer Wägezelle erfasst, auf welcher das Gewichtselement platziert ist.

Es kann genau eine Wägezelle und ein Gewichtselement vorgesehen sein, welche die Kompensationseinrichtung bilden. Vorzugsweise sind jedoch mehrere Wägezellen vorgesehen. Insbesondere entspricht die Anzahl der Wägezellen der Kompensationseinrichtung der Anzahl der Wägezellen des Speicherbehälters. Insbesondere ist jeder Wägezelle des Speicherbehälters eine Wägezelle der Kompensationseinrichtung zugeordnet. Jeder Wägezelle der Kompensationseinrichtung ist ein Gewichtselement zugeordnet.

Ferner wird eine Speicherbehälteranordnung für ein Fahrzeug vorgeschlagen. Die Speicherbehälteranordnung umfasst einen Speicherbehälter zum Speichern eines Kryogens, eine Wägezelle zum Erfassen einer Masse des Speicherbehälters mitsamt dem Kryogen, und eine Kompensationseinrichtung zum Kompensieren von bewegungsbedingten Abweichungen der erfassten Masse des Speicherbehälters mitsamt dem Kryogen von einer tatsächlichen Masse des Speicherbehälters mitsamt dem Kryogen.

Die Speicherbehälteranordnung kann zur Durchführung des zuvor beschriebenen Verfahrens eingesetzt werden. Vorzugsweise sind mehrere Wägezellen vorgesehen. Beispielsweise sind vier derartige Wägezellen des Speicherbehälters vorgesehen. Der Speicherbehälter ist vorzugsweise zylinderförmig und rotationssymmetrisch zu einer Mittelachse aufgebaut. Der Speicherbehälter ist vorzugsweise liegend oder horizontal platziert, so dass die Mittelachse senkrecht zu der Schwerkraftrichtung orientiert ist.

Gemäß einer Ausführungsform sind dem Speicherbehälter mehrere Wägezellen zugeordnet, welche zwischen dem Speicherbehälter und einem Fundament des Speicherbehälters angeordnet sind.

Wie zuvor erwähnt, sind vorzugsweise genau vier Wägezellen vorgesehen. Es können jedoch auch mehr als vier oder weniger als vier Wägezellen vorgesehen sein. Insbesondere sind die Wägezellen zwischen Standbeinen des Speicherbehälters und dem Fundament platziert.

Gemäß einer weiteren Ausführungsform umfasst die Kompensationseinrichtung mehrere Wägezellen, auf welchen Gewichtselemente platziert sind.

Vorzugsweise entspricht die Anzahl der Wägezellen der Kompensationseinrichtung der Anzahl der Wägezellen des Speicherbehälters. Vorzugsweise umfasst die Kompensationseinrichtung vier Wägezellen. Jeder Wägezelle ist ein Gewichtselement zugeordnet. Alle Gewichtselemente weisen dieselbe Masse auf. Beispielsweise weist jedes Gewichtselement eine Masse von 1 kg auf.

Gemäß einer weiteren Ausführungsform sind die Wägezellen des Speicherbehälters und die Wägezellen der Kompensationseinrichtung jeweils paarweise angeordnet, so dass jeder Wägezelle des Speicherbehälters eine Wägezelle der Kompensationseinrichtung zugeordnet ist.

Das heißt insbesondere, dass die Wägezellen der Kompensationseinrichtung und die Wägezellen des Speicherbehälters jeweils in einem Paar zusammenfasst sind, in welchem die beiden Wägezellen jeweils unmittelbar nebeneinander oder benachbart zueinander angeordnet sind.

Gemäß einer weiteren Ausführungsform umfasst die Kompensationseinrichtung eine Auswerteeinheit, welche dazu eingerichtet ist, basierend auf einer erfassten Masse der Gewichtselemente und einer tatsächlichen Masse der Gewichtselemente einen Korrekturfaktor zu errechnen, welcher zum Kompensieren der bewegungsbedingten Abweichungen der erfassten Masse des Speicherbehälters mitsamt dem Kryogen von der tatsächlichen Masse des Speicherbehälters mitsamt dem Kryogen dient.

Die Auswerteeinheit kann ein Rechner oder Computer sein oder einen derartigen umfassen. In der Auswerteeinheit sind insbesondere die Massen der Gewichtselemente sowie die Masse des leeren Speicherbehälters hinterlegt. Unter der "erfassten" Masse ist vorliegend diejenige Masse zu verstehen, die während einer Bewegung des Fahrzeugs, beispielsweise bei starkem Seegang, zu einem beliebigen Zeitpunkt erfasst wird. Unter der "tatsächlichen" Masse ist vorliegend die jeweilige Masse zu verstehen, die ermittelt werden kann, wenn auf den Speicherbehälter oder auf die Gewichtselemente keine Beschleunigung oder Verzögerung wirkt, also das Fahrzeug im Stillstand ist.

Die für das Verfahren beschriebenen Ausführungsformen und Merkmale gelten für die vorgeschlagene Speicherbehälteranordnung entsprechend und umgekehrt.

"Ein" ist vorliegend nicht zwangsweise als beschränkend auf genau ein Element zu verstehen. Vielmehr können auch mehrere Elemente, wie beispielsweise zwei, drei oder mehr, vorgesehen sein. Auch jedes andere hier verwendete Zählwort ist nicht dahingehend zu verstehen, dass eine genaue Beschränkung auf genau die entsprechende Anzahl von Elementen verwirklicht sein muss. Vielmehr sind zahlenmäßige Abweichungen nach oben und nach unten möglich.

Weitere mögliche Implementierungen des Verfahrens und/oder der Speicherbehälteranordnung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Verfahrens und/oder der Speicherbehälteranordnung hinzufügen.

Weitere vorteilhafte Ausgestaltungen des Verfahrens und/oder der Speicherbehälteranordnung sind Gegenstand der Unteransprüche sowie der im Folgenden beschriebenen Ausführungsbeispiele des Verfahrens und/oder der Speicherbehälteranordnung. Im Weiteren werden das Verfahren und/oder die Speicherbehälteranordnung anhand von bevorzugten Ausführungsformen unter Bezugnahme auf die beigelegten Figuren näher erläutert.

Fig. 1 zeigt eine schematische Ansicht einer Ausführungsform eines Fahrzeugs;

Fig. 2 zeigt eine schematische Seitenansicht einer Ausführungsform einer Speicherbehälteranordnung für das Fahrzeug gemäß Fig. 1;

Fig. 3 zeigt eine schematische Vorderansicht der Speicherbehälteranordnung gemäß Fig. 2;

Fig. 4 zeigt eine schematische Schnittansicht der Speicherbehälteranordnung gemäß der Schnittlinie IV-IV der Fig. 3; und

Fig. 5 zeigt ein schematisches Blockdiagramm einer Ausführungsform eines Verfahrens zum Wiegen eines in einem Speicherbehälter aufgenommenen Kryogens auf dem Fahrzeug gemäß Fig. 1.

In den Figuren sind gleiche oder funktionsgleiche Elemente mit denselben Bezugszeichen versehen worden, sofern nichts anderes angegeben ist.

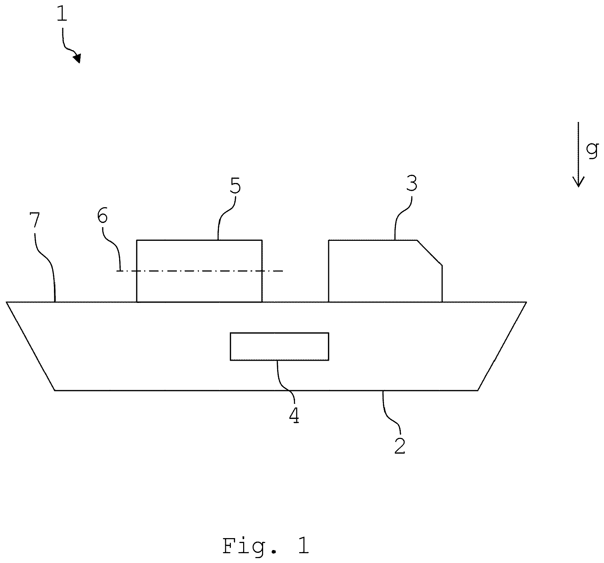

Die Fig. 1 zeigt eine stark vereinfachte schematische Seitenansicht einer Ausführungsform eines Fahrzeugs 1. Das Fahrzeug 1 kann beispielsweise ein maritimes Wasserfahrzeug, insbesondere ein Schiff, sein. Das Fahrzeug 1 kann als maritimes Fahrzeug bezeichnet werden. Insbesondere kann das Fahrzeug 1 eine maritime Personenfähre sein. Alternativ kann das Fahrzeug 1 auch ein Landfahrzeug oder ein Luftfahrzeug sein. Beispielsweise kann das Fahrzeug 1 ein Lastkraftwagen sein. Das Fahrzeug 1 kann auch ein Schienenfahrzeug sein. Nachfolgend wird jedoch davon ausgegangen, dass das Fahrzeug 1 ein Wasserfahrzeug ist.

Das Fahrzeug 1 umfasst einen Rumpf 2, der schwimmfähig ist. An oder auf dem Rumpf 2 ist eine Brücke 3 vorgesehen. Das Fahrzeug 1 wird vorzugsweise mit Wasserstoff betrieben. Hierzu kann das Fahrzeug 1 einen beliebigen Verbraucher 4 aufweisen. Der Verbraucher 4 ist bevorzugt eine Brennstoffzelle. Unter einer "Brennstoffzelle" ist vorliegend eine galvanische Zelle zu verstehen, welche die chemische Reaktionsenergie eines kontinuierlich zugeführten Brennstoffes, vorliegend Wasserstoff, und eines Oxidationsmittels, vorliegend Sauerstoff, in elektrische Energie wandelt. Mit Hilfe der erhaltenen elektrischen Energie kann beispielsweise ein nicht gezeigter Elektromotor angetrieben werden, der wiederum eine Schiffsschraube zum Antreiben des Fahrzeugs 1 antreibt.

Zum Versorgen des Verbrauchers 4 mit Wasserstoff ist ein Speicherbehälter 5 zum Speichern von flüssigem Wasserstoff vorgesehen. Für einen stabilen Betrieb des Verbrauchers 4 ist es erforderlich, den Verbraucher 4 mit gasförmigem Wasserstoff bei einem definierten Versorgungsdruck zu versorgen. Der Speicherbehälter 5 ist rotationssymmetrisch zu einer Mittel- oder Symmetrieachse 6 aufgebaut. Der Speicherbehälter 5 kann beispielsweise innerhalb des Rumpfs 2, insbesondere innerhalb eines Maschinenraums, auf der Brücke 3 oder auf einem als Fundament 7 fungierenden Deck des Rumpfs 2 angeordnet sein.

Dabei kann die Symmetrieachse 6 senkrecht zu einer Schwerkraftrichtung g orientiert sein. Das heißt, der Speicherbehälter 5 ist liegend oder horizontal positioniert. Somit ist die Symmetrieachse 6 parallel zu dem Fundament 7 platziert. Der Speicherbehälter 5 kann jedoch auch stehend oder vertikal positioniert sein. In diesem Fall ist die Symmetrieachse 6 parallel zu der Schwerkraftrichtung g orientiert. Für den Fall, dass das Fahrzeug 1 beispielsweise ein auf einen Wasserstoffantrieb umgerüstetes Fahrzeug ist, kann der Speicherbehälter 5 beispielsweise auch in einem Kamin oder Schornstein des Fahrzeugs 1 platziert sein.

Bei maritimen Anwendungen muss mit durch den Seegang verursachter Bewegung des in dem Speicherbehälter 5 aufgenommenen flüssigen Wasserstoffs gerechnet werden. Bei einem liegend angeordneten zylinderförmigen Speicherbehälter 5 wird durch die Massenträgheit des flüssigen Wasserstoffs und die durch den liegenden Einbau vorhandene Krümmung des Speicherbehälters 5 sowohl an dessen zylinderförmiger Außenwandung als auch an dessen Enden ein großflächiges Schwappen des flüssigen Wasserstoffs begünstigt.

Dieses Schwappen, auch als Sloshing bezeichnet, führt zur Abkühlung der Dampfphase über dem flüssigen Wasserstoff und dadurch zur Druckreduzierung eines sich über dem flüssigen Wasserstoff gebildeten Gaspolsters. Dieses Schwappen sowie eine in und entgegen der Schwerkraftrichtung g wirkende Beschleunigung des flüssigen Wasserstoffs aufgrund des Seegangs führt dazu, dass im Betrieb des Fahrzeugs 1 eine einfache Wägung des Speicherbehälters 5 mit dem darin aufgenommenen flüssigen Wasserstoff keine zuverlässige Aussage über den Füllstand des flüssigen Wasserstoffs in dem Speicherbehälter 5 erlaubt. Ferner weist Wasserstoff temperaturabhängig eine sehr stark schwankende Dichte auf.

Durch das Schwappen des flüssigen Wasserstoffs und durch seine physikalischen Eigenschaften ist eine zuverlässige Füllstandsanzeige über die Messung verschiedener physikalischer Größen und deren komplexe Verrechnung technisch nur sehr aufwändig realisierbar. Insbesondere dadurch, dass bei einem Betriebsdruck von etwa 8 bar bei 30 K der Inhalt des Speicherbehälters 5 ohne das Vorhandensein einer flüssigen Phase immer noch 22 % der zur Verfügung stehenden Menge an Wasserstoff gegenüber einer Flüssigfüllung beträgt, ist die Notwendigkeit ersichtlich, die Menge des in dem Speicherbehälter 5 aufgenommenen Wasserstoffs zu erfassen.

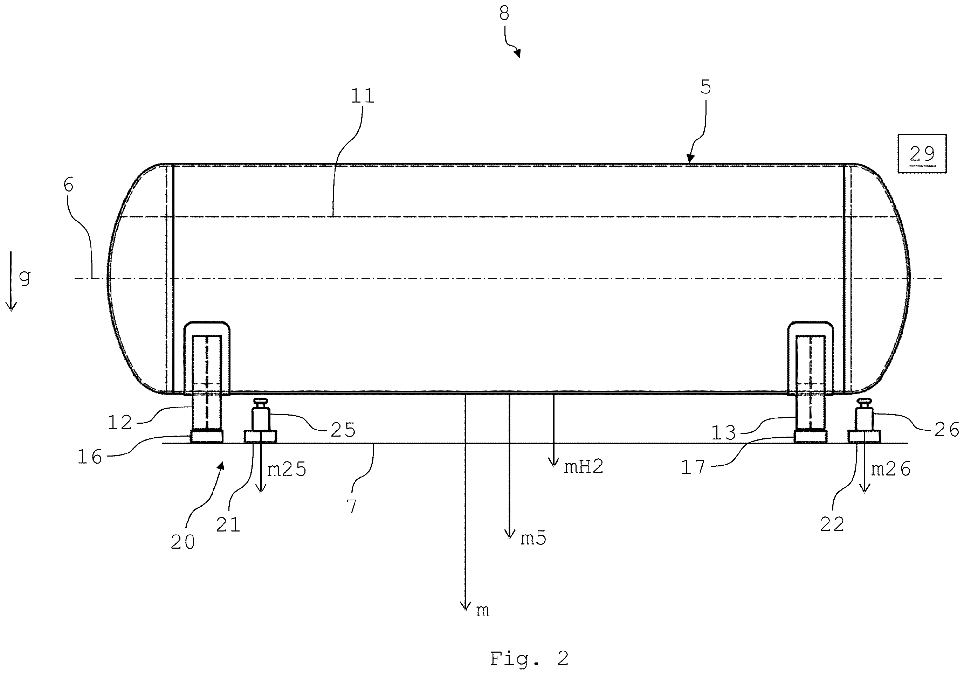

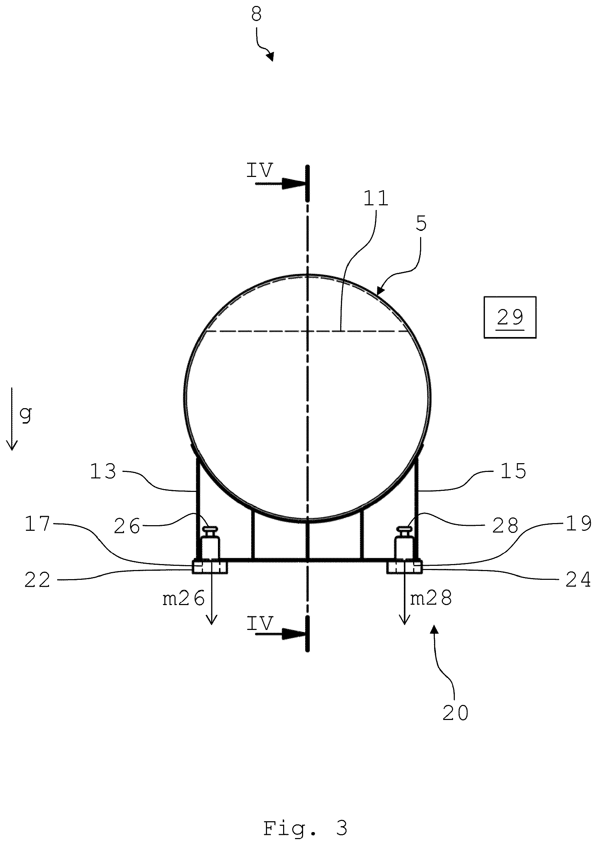

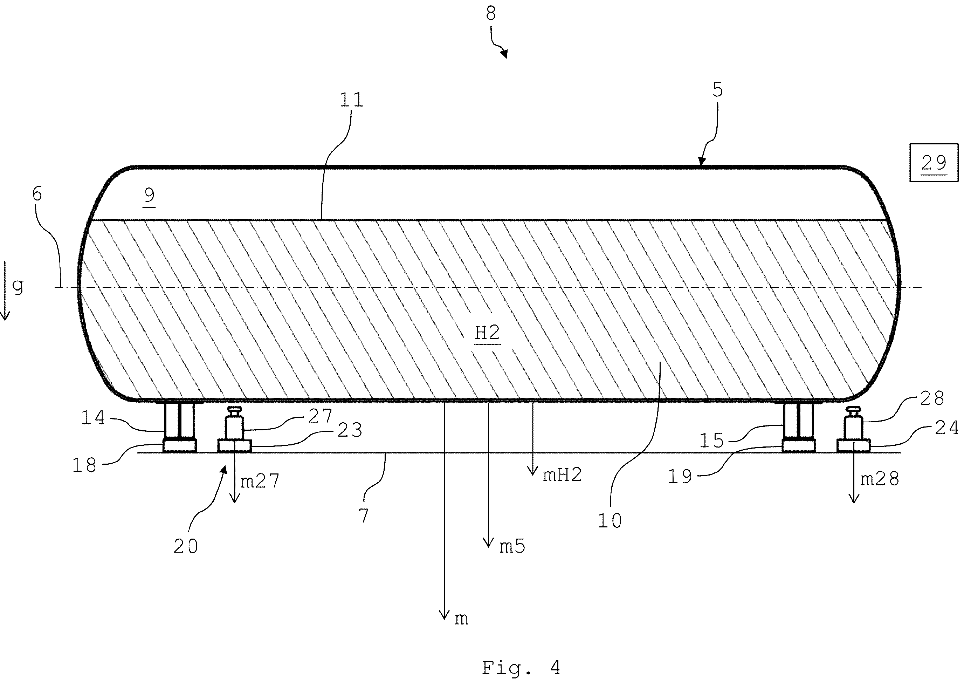

Die Fig. 2 zeigt eine schematische Seitenansicht einer Ausführungsform einer Speicherbehälteranordnung 8. Die Fig. 3 zeigt eine schematische Vorderansicht der Speicherbehälteranordnung 8. Die Fig. 4 zeigt eine schematische Schnittansicht der Speicherbehälteranordnung 8 gemäß der Schnittlinie IV-IV der Fig. 3. Nachfolgend wird auf die Fig. 2 bis 4 gleichzeitig Bezug genommen.

Die Speicherbehälteranordnung 8 kann auch als Speichertankanordnung bezeichnet werden. Die Speicherbehälteranordnung 8 umfasst den Speicherbehälter 5. Der Speicherbehälter 5 kann auch als Speichertank bezeichnet werden. Wie zuvor erwähnt, ist der Speicherbehälter 5 zur Aufnahme von flüssigem Wasserstoff H2 (Siedepunkt 1 bara: 20,268 K = -252,882 °C) geeignet. Daher kann der Speicherbehälter 5 auch als Wasserstoff-Speicherbehälter oder als Wasserstoff-Speichertank bezeichnet sein. Der Speicherbehälter 5 kann jedoch auch für andere kryogene Flüssigkeiten eingesetzt werden. Beispiele für kryogene Fluide oder Flüssigkeiten, oder kurz Kryogene, sind neben dem zuvor erwähnten flüssigen Wasserstoff H2 flüssiges Helium He (Siedepunkt 1 bara: 4,222 K = -268,928 °C), flüssiger Stickstoff N2 (Siedepunkt 1 bara: 77,35 K = -195,80 °C) oder flüssiger Sauerstoff O2 (Siedepunkt 1 bara: 90,18 K = -182,97 °C).

In dem Speicherbehälter 5 ist der flüssige Wasserstoff H2 aufgenommen. In dem Speicherbehälter 5 können, solange sich der Wasserstoff H2 im Zweiphasengebiet befindet, eine Gaszone 9 mit verdampftem Wasserstoff H2 und eine Flüssigkeitszone 10 mit flüssigem Wasserstoff H2 vorgesehen sein. Der Wasserstoff H2 weist also nach dem Einfüllen in den Speicherbehälter 5 zwei Phasen mit unterschiedlichen Aggregatszuständen, nämlich flüssig und gasförmig, auf. Das heißt, in dem Speicherbehälter 5 befindet sich eine Phasengrenze 11 zwischen dem flüssigen Wasserstoff H2 und dem gasförmigen Wasserstoff H2.

Der Speicherbehälter 5 umfasst Füße oder Standbeine 12 bis 15. Beispielsweise sind vier Standbeine 12 bis 15 vorgesehen, welche sich auf dem Fundament 7 abstützen können. Eine Masse m des Speicherbehälters 5 und des in dem Speicherbehälter 5 aufgenommenen Wasserstoffs H2 verteilt sich auf die Standbeine 12 bis 15. Dabei entfällt eine Masse m5 auf den leeren Speicherbehälter 5 und eine Masse mH2 entfällt auf den Wasserstoff H2. Beispielsweise kann die Masse m 20 t betragen, wobei etwa 4 t auf den Wasserstoff H2 entfallen. Jedem Standbein 12 bis 15 ist eine Wägezelle 16 bis 19 zugeordnet, um die Masse m des Speicherbehälters 5 mitsamt des Wasserstoffs H2 zu erfassen. Unter einer "Wägezelle" ist vorliegend eine Sonderform eines Kraftaufnehmers zu verstehen. Im Gegensatz zu einem Kraftaufnehmer ist eine Wägezelle in Gramm, Kilogramm oder Tonnen kalibriert, und nicht in Newton wie der Kraftaufnehmer.

Mit Hilfe der Wägezellen 16 bis 19 ist es möglich, die Masse m zu erfassen. Bei einer starken Auf- und Abbewegung des Speicherbehälters 5 entgegen und in der Schwerkraftrichtung g, beispielsweise bei starkem Seegang, kann es in vertikaler Richtung, das heißt entlang der Schwerkraftrichtung g, zu Beschleunigungen um das $\pm$ 0,8-fache der Erdbeschleunigung ($\vec{g}$) kommen. Dies führt bei einer beliebig angenommenen Masse m von 1 t dazu, dass dass die Wägezellen 16 bis 19 zu einem beliebigen Zeitpunkt t eine Masse m zwischen 0,2 t und 1,8 t erfassen. Das heißt, dass die mit den Wägezellen 16 bis 19 erfasste Masse m(t) von der tatsächlichen Masse m signifikant abweicht. Eine genaue Bestimmung der Masse mH2 des Wasserstoffs H2, der in dem Speicherbehälter 5 aufgenommen ist, ist somit allein über die Wägezellen 16 bis 19 nicht möglich.

Um nun die Masse mH2 exakt erfassen zu können, umfasst die Speicherbehälteranordnung 8 eine Kompensationseinrichtung 20. Mit Hilfe der Kompensationseinrichtung 20 können vertikal wirkende Beschleunigungseinflüsse kompensiert werden. Die Kompensationseinrichtung 20 umfasst Wägezellen 21 bis 24. Die Anzahl der Wägezellen 21 bis 24 ist grundsätzlich beliebig. Es kann genau eine Wägezelle 21 bis 24 vorgesehen sein. Besonders bevorzugt ist jedoch jeder Wägezelle 16 bis 19 eine Wägezelle 21 bis 24 zugeordnet, so dass die Wägezellen 16 bis 19, 21 bis 24 Wägezellenpaare bilden. Der Wägezelle 16 ist die Wägezelle 21 zugeordnet, der Wägezelle 17 ist die Wägezelle 22 zugeordnet, der Wägezelle 18 ist die Wägezelle 23 zugeordnet und der Wägezelle 19 ist die Wägezelle 24 zugeordnet. Die Wägezellen 16, 21 sind benachbart zueinander oder unmittelbar nebeneinander platziert. Gleiches gilt für die Wägezellen 17, 22, die Wägezellen 18, 23 und die Wägezellen 19, 24.

Jeder Wägezelle 21 bis 24 ist ein Gewichtselement 25 bis 28 zugeordnet, das auf der jeweiligen Wägezelle 21 bis 24 platziert ist. Die Gewichtselemente 25 bis 28 sind identisch aufgebaut und weisen jeweils eine definierte Masse m25 bis m28 auf. Die Massen m25 bis m28 sind identisch und betragen beispielsweise 1 kg.

Die Kompensationseinrichtung 20 umfasst eine Auswerteeinheit 29. Die Auswerteeinheit 29 kann ein Rechner oder Computer sein. Die Wägezellen 16 bis 19, 21 bis 24 sind mit der Auswerteeinheit 29 beispielsweise drahtlos oder drahtgebunden gekoppelt (nicht gezeigt), so dass die Auswerteeinheit 29 Messignale der Wägezellen 16 bis 19, 21 bis 24 erfassen und auswerten kann. Ferner sind in der Auswerteeinheit 29 auch die Massen m25 bis m28 der Gewichtselemente 25 bis 28 sowie die Masse m5 des leeren Speicherbehälters 5 hinterlegt.

Die Funktion der Speicherbehälteranordnung 8 beziehungsweise der Kompensationseinrichtung 20 wird nachfolgend erläutert. Es wird davon ausgegangen, dass der Speicherbehälter 5 zumindest teilweise mit Wasserstoff H2 gefüllt ist und dass der Speicherbehälter 5 starke vertikale Bewegungen entlang und entgegen der Schwerkraftrichtung g vollzieht. Diese vertikalen Bewegungen können aus starkem Seegang resultieren. Nachfolgend wird mit einer beispielhaften Rechnung zur Vereinfachung nur auf die Wägezellen 16, 21 und das Gewichtselement 25 eingegangen. Alle Ausführungen betreffend die Wägezellen 16, 21 und das Gewichtselement 25 sind jedoch auf die Wägezellen 17 bis 19, 22 bis 24 und auf die Gewichtselemente 26 bis 28 entsprechend anwendbar.

Die nachfolgenden Größenordnungen sind beliebig gewählt und daher nur als Berechnungsbeispiel zu verstehen. Die tatsächliche Masse m25 beträgt 1 kg. Die tatsächliche Masse m beträgt 20 t, wobei die Masse m5 16 t beträgt. Beispielsweise erfasst die Wägezelle 21 zu dem beliebigen Zeitpunkt t eine Masse m25(t) von 0,2 kg. Die tatsächliche Masse m25 beträgt jedoch 1 kg. Hieraus lässt sich ein Korrekturfaktor k wie folgt errechnen:

$$k = \frac{m25(t)}{m25} = \frac{0,2\ kg}{1\ kg} = 0,2$$

Zum Zeitpunkt t erfasst die Wägezelle 16 eine Masse m(t) von 4 t (Tatsächlich teilt sich die Masse m(t) auf alle vier Wägezellen 16 bis 19 auf.). Mit dem Korrekturfaktor k ergibt sich dann die tatsächliche Masse m wie folgt:

$$m = \frac{m(t)}{k} = \frac{4\ t}{0,2} = 20\ t$$

Da die Masse m5 16 t beträgt und bekannt ist, ergibt sich die Masse mH2 des Wasserstoffs H2 wie folgt:

$$mH2 = m - m5 = 20\ t - 16\ t = 4t$$

Die Masse mH2 des Wasserstoffs H2 lässt sich somit mit Hilfe der Kompensationseinrichtung 20 unabhängig von vertikalen Bewegungen des Speicherbehälters 5 einfach berechnen. Es ist dabei irrelevant, ob der Wasserstoff H2 in flüssiger oder in gasförmiger Form vorliegt. Auch die Dichte des Wasserstoffs H2 ist irrelevant für die Berechnung. Die tatsächliche Masse mH2 ist somit zu jedem Zeitpunkt t berechenbar.

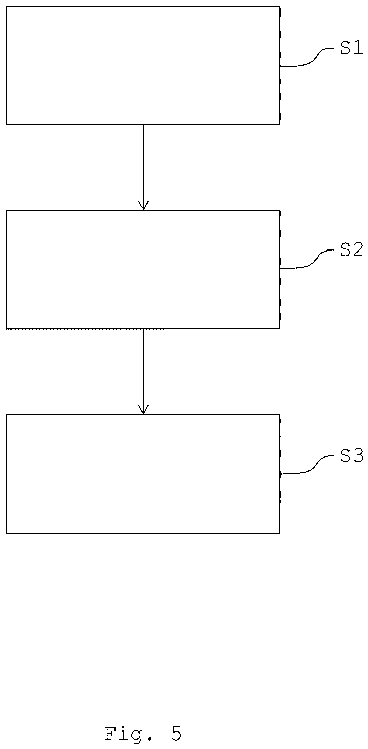

Die Fig. 5 zeigt ein schematisches Blockdiagramm einer Ausführungsform eines Verfahrens zum Wiegen des in dem Speicherbehälter 5 aufgenommenen Wasserstoffs H2. In einem Schritt S1 wird zum Zeitpunkt t die Masse m(t) des Speicherbehälters 5 mitsamt dem Wasserstoff H2 erfasst.

In einem Schritt S2 wird der Korrekturfaktors k mit Hilfe der Kompensationseinrichtung 20 wie zuvor erläutert berechnet oder bestimmt. In einem Schritt S3 wird die in dem Schritt S1 erfassten Masse m(t) des Speicherbehälters 5 mitsamt dem Wasserstoff H2 mit dem Korrekturfaktor k verrechnet, um bewegungsbedingte Abweichungen der erfassten Masse m(t) des Speicherbehälters 5 mitsamt dem Wasserstoff H2 von einer tatsächlichen Masse m des Speicherbehälters 5 mitsamt dem Wasserstoff H2 zu kompensieren.

Unter der "erfassten" Masse m(t) ist die zu dem beliebigen Zeitpunkt t bestimmte und sich aufgrund der vertiklalen Bewegung des Speicherbehälters 5 beschleunigungsbedingt oder verzögerungsbedingt schwankende Masse zu verstehen, die nicht zwingend mit der tatsächlichen Masse m übereinstimmt. Unter der "tatsächlichen" Masse m ist dementsprechend die Masse zu verstehen, die theoretisch dann erfasst werden kann, wenn der Speicherbehälter 5 stillsteht und somit auf diesen keine durch den Seegang bedingten Verzögerungen und Beschleunigungen wirken.

Obwohl die vorliegende Erfindung anhand von Ausführungsbeispielen beschrieben wurde, ist sie vielfältig modifizierbar.

Verwendete Bezugszeichen

| | |
|---|---|
| 1 | Fahrzeug |
| 2 | Rumpf |
| 3 | Brücke |
| 4 | Verbraucher |
| 5 | Speicherbehälter |
| 6 | Symmetrieachse |
| 7 | Fundament |
| 8 | Speicherbehälteranordnung |
| 9 | Gaszone |
| 10 | Flüssigkeitszone |
| 11 | Phasengrenze |
| 12 | Standbein |
| 13 | Standbein |
| 14 | Standbein |
| 15 | Standbein |
| 16 | Wägezelle |
| 17 | Wägezelle |
| 18 | Wägezelle |
| 19 | Wägezelle |
| 20 | Kompensationseinrichtung |
| 21 | Wägezelle |
| 22 | Wägezelle |
| 23 | Wägezelle |
| 24 | Wägezelle |
| 25 | Gewichtselement |
| 26 | Gewichtselement |
| 27 | Gewichtselement |
| 28 | Gewichtselement |
| 29 | Auswerteeinheit |
| | |
| g | Schwerkraftrichtung |
| H2 | Wasserstoff/Kryogen |
| m | Masse |
| mH2 | Masse |
| m5 | Masse |
| m25 | Masse |
| m26 | Masse |
| m27 | Masse |
| m28 | Masse |
| S1 | Schritt |
| S2 | Schritt |
| S3 | Schritt |

**Patentansprüche**

1. Verfahren zum Wiegen eines in einem Speicherbehälter (5) aufgenommenen Kryogens (H2) auf einem Fahrzeug (1), mit folgenden Schritten:

   a) Erfassen (S1) einer Masse (m(t)) des Speicherbehälters (5) mitsamt dem Kryogen (H2),
   b) Bestimmen (S2) eines Korrekturfaktors (k) mit Hilfe einer Kompensationseinrichtung (20), und
   c) Verrechnen (S3) der in dem Schritt a) erfassten Masse (m(t)) des Speicherbehälters (5) mitsamt dem Kryogen (H2) mit dem Korrekturfaktor (k), um bewegungsbedingte Abweichungen der erfassten Masse (m(t)) des Speicherbehälters (5) mitsamt dem Kryogen (H2) von einer tatsächlichen Masse (m) des Speicherbehälters (5) mitsamt dem Kryogen (H2) zu kompensieren.

2. Verfahren nach Anspruch 1, wobei in dem Schritt c) eine Masse (m5) des leeren Speicherbehälters (5) von der tatsächlichen Masse (m) des Speicherbehälters (5) mitsamt dem Kryogen (H2) subtrahiert wird, um eine Masse (mH2) des Kryogens (H2) zu erhalten.

3. Verfahren nach Anspruch 1 oder 2, wobei in dem Schritt a) die Masse (m(t)) des Speicherbehälters (5) mitsamt dem Kryogen (H2) mit Hilfe von Wägezellen (16 - 19) erfasst wird, auf welchen der Speicherbehälter (5) platziert ist.

4. Verfahren nach einem der Ansprüche 1 - 3, wobei in dem Schritt b) der Korrekturfaktor (k) dadurch bestimmt wird, dass eine erfasste Masse (m25(t), m26(t), m27(t), m28(t)) eines Gewichtselements (25 - 28) mit einer tatsächlichen Masse (m25, m26, m27, m28) des Gewichtselements (25 - 28) verglichen wird.

5. Verfahren nach Anspruch 4, wobei die Masse (m25(t), m26(t), m27(t), m28(t)) des Gewichtselements (25 - 28) mit Hilfe einer Wägezelle (21 - 24) erfasst wird, auf welcher das Gewichtselement (25 - 28) platziert ist.

6. Speicherbehälteranordnung (8) für ein Fahrzeug (1), mit einem Speicherbehälter (5) zum Speichern eines Kryogens (H2), einer Wägezelle (16 - 19) zum Erfassen einer Masse (m(t)) des Speicherbehälters (5) mitsamt dem Kryogen (H2), und einer Kompensationseinrichtung (20) zum Kompensieren von bewegungsbedingten Abweichungen der erfassten Masse (m(t)) des Speicherbehälters (5) mitsamt dem Kryogen (H2) von einer tatsächlichen Masse (m) des Speicherbehälters (5) mitsamt dem Kryogen (H2).

7. Speicherbehälteranordnung nach Anspruch 6, wobei dem Speicherbehälter (5) mehrere Wägezellen (16 -19) zugeordnet sind, welche zwischen dem Speicherbehälter (5) und einem Fundament (7) des Speicherbehälters (5) angeordnet sind.

8. Speicherbehälteranordnung nach Anspruch 7, wobei die Kompensationseinrichtung (20) mehrere Wägezellen (21 - 24) umfasst, auf welchen Gewichtselemente (25 - 28) platziert sind.

9. Speicherbehälteranordnung nach Anspruch 8, wobei die Wägezellen (16 - 19) des Speicherbehälters (5) und die Wägezellen (21 - 24) der Kompensationseinrichtung (20) jeweils paarweise angeordnet sind, so dass jeder Wägezelle (16 - 19) des Speicherbehälters (5) eine Wägezelle (21 - 24) der Kompensationseinrichtung (20) zugeordnet ist.

10. Speicherbehälteranordnung nach Anspruch 8 oder 9, wobei die Kompensationseinrichtung (20) eine Auswerteeinheit (29) umfasst, welche dazu eingerichtet ist, basierend auf einer erfassten Masse (m25(t), m26(t), m27(t), m28(t)) der Gewichtselemente (25 - 28) und einer tatsächlichen Masse (m25, m26, m27, m28) der Gewichtselemente (25 - 28) einen Korrekturfaktor (k) zu errechnen, welcher zum Kompensieren der bewegungsbedingten Abweichungen der erfassten Masse (m(t)) des Speicherbehälters (5) mitsamt dem Kryogen (H2) von der tatsächlichen Masse (m) des Speicherbehälters (5) mitsamt dem Kryogen (H2) dient.

Fig. 1

Fig. 2

8

IV

11

5

29

g

13

15

17

26

28

19

22

24

m26

IV

m28

20

Fig. 3

Fig. 4

S1

S2

S3

Fig. 5

**Europäisches Patentamt**
**European Patent Office**
**Office européen des brevets**

# EUROPÄISCHER RECHERCHENBERICHT

**Nummer der Anmeldung**

EP 20 02 0585

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2004 050827 A1 (TOYOTA JIDOSHOKKI KARIYA KK [JP]; TOYOTA MOTOR CO LTD [JP]) 2. Juni 2005 (2005-06-02) * Absatz [0045]; Abbildungen 6-8 * ----- | 1-10 | INV. F17C13/02 |
| X | DE 10 2018 116423 A1 (BUNDESREPUBLIK DEUTSCHLAND VERTRETEN DURCH DIE BUNDESMINISTERIN FUER W) 9. Januar 2020 (2020-01-09) | 1-3,6,7 | |
| A | * Abbildung 2 * ----- | 4,5,8-10 | |
| X | DE 10 2017 001370 A1 (DAIMLER AG [DE]) 16. August 2018 (2018-08-16) * Abbildung 4 * ----- | 1-3,6,7 | |
| X | DE 100 53 490 A1 (COENEN GOETZ [DE]) 8. Mai 2002 (2002-05-08) * Anspruch 6; Abbildungen 11-15 * ----- | 1-3,6,7 | |
| A | Anonymous: "Piezoelectric accelerometer - Wikipedia", , 21. September 2020 (2020-09-21), Seiten 1-4, XP055806658, Gefunden im Internet: URL:https://en.wikipedia.org/wiki/Piezoelectric_accelerometer [gefunden am 2021-05-21] * Zusammenfassung; Seite 1 * ----- | 4,5,10 | **RECHERCHIERTE SACHGEBIETE (IPC)** F17C |

Der vorliegende Recherchenbericht wurde für alle Patentansprüche erstellt

| Recherchenort | Abschlußdatum der Recherche | Prüfer |
|---|---|---|
| München | 21. Mai 2021 | Papagiannis, Michail |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 02 0585

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-05-2021

| Im Recherchenbericht angeführtes Patentdokument | Datum der Veröffentlichung | Mitglied(er) der Patentfamilie | Datum der Veröffentlichung |
|---|---|---|---|
| DE 102004050827 A1 | 02-06-2005 | CN 1609566 A<br>DE 102004050827 A1<br>JP 4254475 B2<br>JP 2005127171 A<br>KR 20050039571 A<br>US 2005166673 A1 | 27-04-2005<br>02-06-2005<br>15-04-2009<br>19-05-2005<br>29-04-2005<br>04-08-2005 |
| DE 102018116423 A1 | 09-01-2020 | DE 102018116423 A1<br>EP 3818296 A2<br>KR 20210028211 A<br>WO 2020007933 A2 | 09-01-2020<br>12-05-2021<br>11-03-2021<br>09-01-2020 |
| DE 102017001370 A1 | 16-08-2018 | KEINE | |
| DE 10053490 A1 | 08-05-2002 | KEINE | |

EPO FORM P0461

Für nähere Einzelheiten zu diesem Anhang : siehe Amtsblatt des Europäischen Patentamts, Nr.12/82